# EUROPEAN PATENT SPECIFICATION

(11) **EP 3 412 475 B1**
(45) Date of publication and mention of the grant of the patent: **21.08.2019**
(21) Application number: 17397516.0
(22) Date of filing: 08.06.2017
(51) Int. Cl.: B60C 11/03, B60C 11/13

(54) **PNEUMATIC VEHICLE TYRE**
FAHRZEUGLUFTREIFEN
PNEU DE VÉHICULE PNEUMATIQUE

(43) Date of publication of application: 12.12.2018
(73) Proprietor: Nokian Raskaat Renkaat Oy, 37101 Nokia (FI)
(72) Inventor: Ulmonen, Reko, 33900 Tampere (FI); Viskari, Jari, 37100 Nokia (FI); Claassen, Caleb, 33210 Tampere (FI)
(74) Representative: Berggren Oy, Tampere

(56) References cited:
- EP-B1- 0 625 435
- EP-B1- 2 987 652

## Description

### Field of the invention

The solution to be presented is a pneumatic tyre for a vehicle. Said tyre is suitable for use in vehicles including agricultural machines, forest machines, excavation machines and earth moving machines, such as e.g. tractors, harvesters, forwarders, excavators, and wheel loaders.

### Background of the invention

Vehicles are often moved on unpaved ground which may be wet, slippery and soft, and in which the patterns of the tread of the tyre sink. The friction between the ground and the surface can be increased by increasing the surface area of the pattern that is in contact with the ground, for example soil surface. However, this prevents the tyre from sinking in the ground and thereby acts as a factor reducing the traction capacity. On the other hand, large grooves between the patterns, or sparsely placed patterns, improve the performance of the tyre but have an unfavourable effect on the rolling properties of the tyre and involve a risk of wear-out failure when the vehicle is moving on such a hard ground in which the tyre does not sink.

A pneumatic vehicle tyre for wet conditions and with large grooves according to the preamble of claim 1 is disclosed in document EP 2987652 B1.

### Brief summary of the invention

The present solution for a pneumatic vehicle tyre will be disclosed in the appended claim 1.

According to the solution, the pneumatic tyre for a vehicle comprises a tread section which extends around the tyre in the longitudinal direction of the tyre and is in contact with the ground surface during its use. The tyre has a width in the direction transverse to the longitudinal direction, defining a central line and a central zone placed on the central line in the tread section, between its left and right edge zones. Said edge zones, in turn, are located at two opposite edges of the tread section in such a way that a left intermediate zone is placed between the left edge zone and the central zone, separating these, and a right intermediate zone is placed between the right edge zone and the central zone, separating these.

Furthermore, the tread section comprises a left and a right row of tread blocks, the rows being next to each other and extending in the longitudinal direction of the tyre, and the tread blocks being separated from each other by grooves. Furthermore, each tread block in the tread section is placed in an oblique position with respect to the longitudinal direction of the tyre. Each tread block of the right row comprises a first branch having an end in the central zone and extending obliquely across the right intermediate zone to the right edge zone, as well as a second branch having an end in the right intermediate zone and extending obliquely to the right edge zone.

In the right edge zone, the first branch and the second branch are separated from each other by a first auxiliary groove between them. In the right intermediate zone, the first branch and the second branch are separated from each other by a second auxiliary groove connecting the first auxiliary groove with at least one groove.

The bottom of the second auxiliary groove is elevated to form a support which is attached to the first and second branches and connects them in such a way that the depth of the second auxiliary groove in the area of said support is smaller than the depth of the groove, and the depth of the first auxiliary groove is greater than the depth of the second auxiliary groove.

Moreover, the tread block in the left row follows the above presented principles, with respect to the left intermediate zone and the left edge zone.

In the central zone, seen in the longitudinal direction of the tyre, the tread blocks alternate in such a way that every other tread block is a tread block of the left row and every other tread block is a tread block of the right row. Further, according to an example, it is possible that the first branch of each tread block extends across the central line.

The presented solution serves to ensure that the patterns of the tread of the tyre sink into the ground and thereby act as a factor enhancing the traction capacity. Compared with the state of art, the large unbroken surface area of the pattern is replaced with a plurality of smaller surface areas, whereby the friction caused by the pattern can be increased as well. The layout and the surface areas of the tread blocks make an impact on the extent to which the tread sinks into the ground. By supporting the tread blocks to each other, it is possible to ensure that the deformations of the tread are smaller. Using the plurality of said blocks also secures good rolling performance of the tyre.

### Description of the drawings

The presented solution will be described in greater detail in the following, with reference to the accompanying drawings.
Figure 1 shows a part of the tread section of the tyre, seen in the radial direction of the tyre.
Figure 2 shows a cross-section of the treat section of the tyre of Fig. 1, seen in the longitudinal direction of the tyre.
Figure 3 shows a tread block representing the tread section of Fig. 1, see in the radial direction of the tyre.

### Detailed description of the invention

The presented solution relates to a pneumatic vehicle tyre which is suitable for use in vehicles including agricultural machines, forest machines, excavation machines and earth moving machines, such as e.g. tractors, harvesters, forwarders, excavators, and wheel loaders.

This description deals with the tread section of the tyre, which is the patterned part of the tyre that is in contact with e.g. the ground surface, a road surface, or a base. The tread section is placed on the body of the tyre. The tyre is a pneumatic tyre which is filled with a gas, such as air, when installed on a rim. The tread section is provided on the circumference of the tyre and constitutes an endless surface in the rotation direction and the longitudinal direction of the tyre, making it possible for the tyre to roll forward.

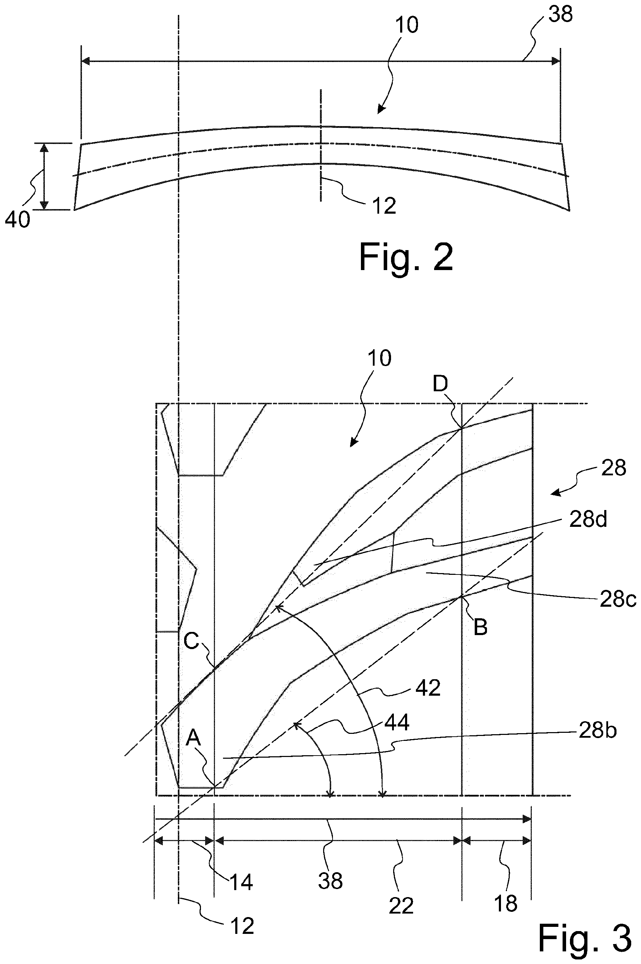

According to Fig. 2, the tread section 10 has a given thickness, and its upper surface typically defines a gently curved patterned surface in the transverse direction of the tyre, and a perpendicular tilted edge surface as an extension to the side of the tyre. Said patterned surface is in contact with e.g. the ground surface. The width 38 of the tread section 10 is typically determined by said curved and patterned surface alone or in combination with said edge surface. The tread section 10 typically has a constant width over the whole circumference of the tyre, whereby it defines a central line 12 for the tyre, in the centre of the tread section 10. The pattern of the tread section 10 is formed by grooves whose depth 40 is defined as the distance between the bottoms of the grooves and the patterned surface. The imaginary bottom plane jointly defined by the grooves constitutes a gently curved plane which deviates from the curved plane defined by the patterned surface in such a way that the depth 40 of the grooves increases from the central line 12 towards the edge surface. The planes defined by the patterned surface and the bottom plane of the grooves are curved in the longitudinal direction of the tyre as well.

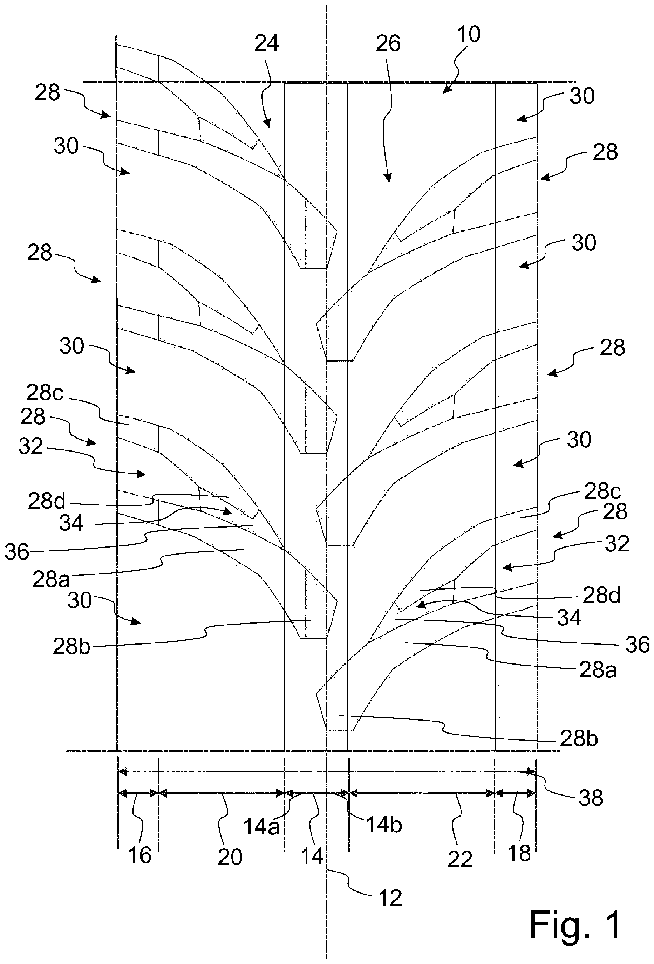

In the solution shown in Fig. 1, the tread section 10 extends around the tyre in the longitudinal direction of the tyre and is in contact with the ground surface during use. The tread section 10 has a width 38 in the direction transverse to the longitudinal direction of the tyre, defining a central line 12 and a central zone 14 for the tread section 10. The central zone 14 is placed centrally in the tread section 10, between a left edge zone 16 and a right edge zone 18, either symmetrically or asymmetrically over the central line 12. In an example and as shown in Fig. 1, the edge zones 16, 18 are equal in width.

In an example, each edge zone 16, 18 alone covers not more than 5%, not more than 15 %, or preferably not more than 10% of the width 38.

The edge zones 16, 18 are placed at the two opposite edges of the tread section 10 so that there is also a left intermediate zone 20 placed between the left edge zone 16 and the central zone 14, for separating them. A right intermediate zone 22 is placed between the right edge zone 18 and the central zone 14, separating them. In an example and as shown in Fig. 1, the intermediate zones 22, 24 are equal in width.

In an example, each intermediate zone 22, 24 alone covers not more than 15%, not more than 20%, not more than 25%, or preferably not more than 30% of the width 38.

In an example, the central zone 14 is placed symmetrically over the central line 12, half of it being placed on the left of the central line 12 and half on the right of the central line 12. In another example and as shown in Fig. 1, the central zone 14 is placed asymmetrically over the central line 12, less than half of it being placed on one side of the central line 12 and more than half on the other side of the central line 12.

In an example, the symmetrically placed central zone 12 covers not more than 5%, not more than 10%, not more than 15%, or preferably not more than 20% of the width 38. In another example, the asymmetrically placed central zone 14 covers not more than 15% of the width 38 so that the part of the central zone 14 placed on one side of the central line 12 represents not more than 10% of the width 38, and the part of the central zone 14 placed on the other side of the central line 12 represents not more than 5% of the width 38.

The tread section 10 comprises a left row 24 and a right row 26 of tread blocks 28, the rows being adjacent to each other. The tread blocks 28 are separated by grooves 30 between said tread blocks. The rows 24, 26 extend in the longitudinal direction of the tyre. The grooves 30 are placed in the central zone 14, the intermediate zones 20, 22, and the edge zones 16, 18, and they are connected to each other.

Seen in the cross direction of the tyre, the above mentioned central line 12, central zone 14, edge zones 16, 18, and intermediate zones 20, 22 divide the tread section 10 into imaginary zones which extend in the longitudinal direction of the tyre and which can be used to define the layout of the tread blocks 28.

In an example, the depths 40 of the grooves 30 substantially correspond to each other.

Furthermore in the presented solution, each tread block 28 in the tread section 10 is placed in an oblique position with respect to the longitudinal direction of the tyre. Preferably, all the tread blocks 28 in each row 24, 26 are in the same position, and adjacent tread blocks in different rows 24, 26 are placed in a mirror-like layout.

Preferably, however, as shown in Fig. 1, seen in the longitudinal direction of the tyre, the tread blocks 28 alternate in such a way that every other tread block 28 is a tread block 28 of the left row 24 and every other tread block 28 is a tread block 28 of the right row 26. In particular, this is the case in the central zone 14 where the ends of the tread blocks 28 are placed.

In at least one row 24, 26 but preferably in both of the rows 24, 26, the shape of the tread block 28 is as will be presented in the following. In the following description, we shall discuss the tread blocks 28 of the right row 26, but the same definitions and descriptions apply to the tread blocks 28 of the left row 24 as well, when the left edge zone 16 and the left intermediate zone 20 are seen, for example, as a mirror image, unless otherwise mentioned. Furthermore, the following examples and features may be present in combinations in a tyre.

The tread block 28 comprises a first branch 28a whose end 28b is in the central zone 14 and which extends obliquely across the right intermediate zone 22 to the right edge zone 18. The tread block 28 further comprises a second branch 28c whose end 28d is in the right intermediate zone 22 and which extends obliquely to the right edge zone 18. The first and the second branches 28a, 28c are separated from each other in the right edge zone 18 by a first auxiliary groove 32 between them.

In an example and Fig. 1, the first branch 28a extends across the central line 12 to its left side. Thus, the end 28b of the first branch 28a may be placed in such a central zone 14 that is either symmetrical or asymmetrical so that, in the latter case, most of the central zone 14 is placed on the left side of the central line 12. In another example, the first branch 28a does not extend to the central line 12 or across it.

In an example and in Fig. 1, the end 28d of the second branch 28c is spaced from the central zone 14.

In an example and Fig. 1, the first auxiliary groove 32 extends to the right intermediate zone 22 where it together with the second auxiliary groove 34 separates the first and second branches 28a, 28c from each other. In an example and Fig. 1, the first auxiliary groove 32 extends to the right intermediate zone 22 where it together with the second auxiliary groove 34 separates the first and second branches 28a, 28c from each other. The second auxiliary groove 34 may be an extension to the first auxiliary groove 32. The first auxiliary groove 32 may be spaced from the right edge zone 18.

In the presented solution, the first and second branches 28a, 28c are separated from each other in the right intermediate zone 22 by a second auxiliary groove 34 connecting the first auxiliary groove 32e with one or more grooves 30.

In an example and Fig. 1, the second auxiliary groove 34 lies entirely in the right intermediate zone 22. In another example and Fig. 1, the second auxiliary groove 34 is spaced from both the central zone 14 and the right edge zone 18.

In the presented solution, the bottom of the second auxiliary groove 34 is elevated to form a support 36 attached to the first and second branches 28a, 28c and connecting them to each other. In the area of said support 36, the depth of the second auxiliary groove 34 is smaller than the depth of the groove 30 to which the second auxiliary groove 34 is connected and which is adjacent to the second auxiliary groove 34, or compared with a groove 30 on the same line as the second auxiliary groove 34 in the longitudinal direction of the tyre.

In this description, the depths of the different parts and the radial directions are preferably viewed between such parts that are either on the same line in the longitudinal direction of the tyre, or are placed next to each other.

In an example, the distance between the bottom of the second auxiliary groove 34 and the bottom of the groove 30 is preferably at least 25% or at least 30% or at least 35% or at least 40% of the depth of the bottom of the groove 30, or the depth 40, seen in the radial direction of the tyre. Furthermore, in an example, it is possible that said distance is not greater than 35% or not greater than 40% or not greater than 45% or not greater than 50% of the depth of the bottom of the groove 30, or the depth 40.

In an example, the depth of the first auxiliary groove 32 is equal to or greater than the depth of the second auxiliary groove 34. The distance between the bottom of the first auxiliary groove 32 and the bottom of the groove 30 is preferably at least 10% or at least 15% or at least 20% or at least 25%, and further not greater than 30% or not greater than 35% or preferably not greater than 40% of the depth of the bottom of the groove 30, or the depth 40, seen in the radial direction of the tyre.

In an example, the support 36 extends over the whole length of the second auxiliary groove 34, as shown in Fig. 1, or over a shorter distance. Preferably, the support 36 is formed to be integrated in the tread section 10 and to be an integral part of it. The support 36 constitutes a part connected to the branches 28a, 28c, seen as *e.g.* a bulge or a bottom surface placed higher than the bottom surface of the groove 30.

In an example, the second auxiliary groove 34, preferably with the support 36 therein, is placed between the end 28d of the second branch 28c and the first branch 28a.

In an example and Fig. 1, the first branch 28a follows a curved shape having opposite convex and concave sides. Preferably, the second branch 28c is placed next to the convex side of the first branch 28a.

In an example and in Fig. 1, the first branch 28a and/or the second branch 28c each alone constitutes a uniform top surface. In an example, the first branch 28a and/or the second branch 28c is provided with one or more supplementary grooves which cut off said branch and divide its form into parts. Preferably, the depth of said supplementary groove is smaller than the depth of the groove 30.

According to the example of Fig. 3, the obliqueness of the tread block 28 is defined by those edge points A and C, at which the tread block 28 intersects the line between the central zone 14 and the intermediate zone 22. The tread block 28 is placed, over its entire width, between the edge points A and C on one hand, and between the edge points B and D on the other hand, seen in the longitudinal direction of the tyre. Preferably, the edge points A and C are placed in the first branch 28a, adjacent to the grooves 30. Furthermore, the obliqueness of the tread block 28 is defined by those edge points B and D, at which the tread block 28 intersects the line between the intermediate zone 22 and the edge zone 18. Preferably, the edge point C is placed in the first branch 28a, adjacent to the groove 30, and the edge point D is placed in the second branch 28c, adjacent to the groove 30. The edge points A and B are on the same side of the tread block 28 and simultaneously on the opposite side of the tread block 28 with respect to the edge points C and D.

As shown in Fig. 3, an imaginary line drawn through the edge points A and B defines a first angle of inclination 44 for the position of the tread block 28, with respect to the cross direction of the tyre and the tread section 10. The first angle of inclination 44 is preferably at least 15°, at least 20°, at least 25°, or at least 30°, or approximately 38°. Furthermore, in an example, said angle of inclination may be not greater than 45°, or not greater than 50°, or not greater than 55°, or preferably not greater than 60°.

As shown in Fig. 3, an imaginary line drawn through the edge points C and D defines a second angle of inclination 42 for the position of the tread block 28, with respect to the cross direction of the tyre and the tread section 10. The second angle of inclination 42 is not greater than 45° not greater than 50° not greater than 55° or preferably not greater tha n 60° or approximately 44° Furthermore, in an example, said angle of inclination is preferably at least 15°, at least 20°, at least 25°, or at least 30° I n an example, the second angle of inclination 42 is greater than the first angle of inclination 44.

The presented solution and its different embodiments will be defined in more detail in the appended claims.

## Claims

1. A pneumatic tyre for a vehicle, the tyre comprising:
a tread section (10) extending around the tyre in the longitudinal direction of the tyre and being in contact with the ground surface during use, and having a width (38) in the direction transverse to the longitudinal direction of the tyre,
wherein the tread section (10) defines a central line (12) and a central zone (14) placed over the central line (12) and between a left and a right edge zone (16, 18) of the tread section, the edge zones, in turn, being placed at two opposite edges of the tread section in such a way that a left intermediate zone (20) is placed between the left edge zone (16) and the central zone (14), separating these, and a right intermediate zone (22) is placed between the right edge zone (18) and the central zone (14), separating these,
wherein the tread section (10) further comprises:
a left and a right row (24, 26) of tread blocks (28), the rows being adjacent to each other and extending in the longitudinal direction of the tyre, and the tread blocks being separated from each other by grooves (30);
wherein, in the tread section (10),
each tread block (28) is placed in an oblique position with respect to the longitudinal direction of the tyre;
each tread block (28) of the right row (26) comprises:
a first branch (28a) having an end (28b) and extending obliquely to the right edge zone (18), and
a second branch (28c) having an end (28d) in the right intermediate zone (22) and extending obliquely to the right edge zone (18);
the first and the second branches (28a, 28c) are separated from each other in the right edge zone (18) by a first auxiliary groove (32) between them; and
the first and second branches (28a, 28c) are separated from each other in the right intermediate zone (22) by a second auxiliary groove (34) connecting the first auxiliary groove (32) to a groove (30);
**characterized in that**:
with respect to the right row (26), the right side (14b) of the central zone (14), placed on the right side of the central line (12) covers not more than 5% of the width (38), and the left side (14a) of the central zone (14), placed on the left side of the central line (12), covers not more than 10% of the width (38);
the right edge zone (18) covers not more and not less than 15% of the width (38); the end (28b) of the first branch (28a) is in the central zone (14) and the first branch (28a) extends obliquely across the right intermediate zone (22) to the right edge zone (18); the tread blocks (28) alternate in the central zone (14), seen in the longitudinal direction of the tyre, in such a way that every other tread block (28) is a tread block (28) of the left row (24), and every other tread block (28) is a tread block (28) of the right row (26); and
the bottom of the second auxiliary groove (34) is elevated to form a support (36) which is attached to the first and second branches (28a, 28c) to connect them in such a way that the depth of the second auxiliary groove (34) in the area of said support (36) is smaller than the depth of the groove (30), and the depth of the first auxiliary groove (32) is greater than the depth of the second auxiliary groove (34).

2. The tyre according to claim 1, wherein
the left edge zone (16) covers 15% of the width (38);
each tread block (28) of the left row (24) comprises:
a first branch (28a) having an end (28b) in the central zone (14) and extending obliquely across the left intermediate zone (20) to the left edge zone (16), and
a second branch (28c) having an end (28d) in the left intermediate zone (20) and extending obliquely to the left edge zone (16);
the first and the second branches (28a, 28c) are separated from each other in the left edge zone (16) by a first auxiliary groove (32) between them;
the first and second branches (28a, 28c) are separated from each other in the left intermediate zone (20) by a second auxiliary groove (34) connecting the first auxiliary groove (32) to a groove (30); and
the bottom of the second auxiliary groove (34) is elevated to form a support (36) attached to the first and second branches (28a, 28c) and connecting them in such a way that the depth of the second auxiliary groove (34) in the zone of said support is smaller than the depth of the groove (30), and the depth of the first auxiliary groove (32) is greater than the depth of the second auxiliary groove (34).

3. The tyre according to claim 1 or 2, wherein the first branch (28a) of each tread block (28) extends across the central line (12).

4. The tyre according to any one of the claims 1 to 3, wherein in the right row (26), the first auxiliary groove (32) of each tread block (28) extends from the right edge zone (18) to the right intermediate zone (22), and the second auxiliary groove (34) is an extension to the first auxiliary groove (32).

5. The tyre according to any one of the claims 1 to 4, wherein the second auxiliary groove (34) and the support (36) are placed between the end (28d) of the second branch (28c) and the first branch (28a).

6. The tyre according to any one of the claims 1 to 5, wherein in the right row (26) the second auxiliary groove (34) and the support (36) are placed completely in the right intermediate zone (22).

7. The tyre according to any one of the claims 1 to 6, wherein the support (36) extends over the whole length of the second auxiliary groove (34).

8. The tyre according to any one of the claims 1 to 7, wherein the distance between the bottom of the first auxiliary groove (32) and the bottom of the groove (30) is at least 10% and not greater than 40% of the depth of the bottom of the groove (30), seen in the radial direction of the tyre.

9. The tyre according to any one of the claims 1 to 8, wherein the distance between the bottom of the second auxiliary groove (34) and the bottom of the groove (30) is at least 25% of the depth of the bottom of the groove (30), seen in the radial direction of the tyre.

## Patentansprüche

1. Luftreifen für ein Fahrzeug, wobei der Reifen Folgendes umfasst:
eine Profilsektion (10), die sich in der Längsrichtung des Reifens um den Reifen herum erstreckt und während des Gebrauchs mit der Bodenfläche in Kontakt steht und in der Richtung quer zur Längsrichtung des Reifens eine Breite (38) aufweist,
wobei die Profilsektion (10) eine Mittellinie (12) und eine Mittelzone (14) definiert, die über der Mittellinie (12) und zwischen einer linken und einer rechten Randzone (16, 18) der Profilsektion angeordnet ist, wobei die Randzonen ihrerseits an zwei gegenüberliegenden Rändern der Profilsektion in einer solchen Weise angeordnet sind, dass eine linke Zwischenzone (20) zwischen der linken Randzone (16) und der Mittelzone (14) angeordnet ist und diese trennt, und eine rechte Zwischenzone (22) zwischen der rechten Randzone (18) und der Mittelzone (14) angeordnet ist und diese trennt,
wobei die Profilsektion (10) des Weiteren umfasst:
eine linke und eine rechte Reihe (24, 26) von Profilblöcken (28), wobei die Reihen nebeneinander liegen und sich in der Längsrichtung des Reifens erstrecken, und die Profilblöcke durch Nuten (30) voneinander getrennt sind;
wobei in der Profilsektion (10)
jeder Profilblock (28) in einer schrägen Position mit Bezug auf die Längsrichtung des Reifens angeordnet ist;
jeder Profilblock (28) der rechten Reihe (26) umfasst:
einen ersten Abzweig (28a), der ein Ende (28b) aufweist und sich schräg zu der rechten Randzone (18) erstreckt, und
einen zweiten Abzweig (28c), der ein Ende (28d) in der rechten Zwischenzone (22) aufweist und sich schräg zu der rechten Randzone (18) erstreckt;
wobei der erste und der zweite Abzweig (28a, 28c) in der rechten Randzone (18) durch eine erste Zusatzrille (32) zwischen sich voneinander getrennt sind; und
der erste und der zweite Abzweig (28a, 28c) in der rechten Zwischenzone (22) durch eine zweite Zusatzrille (34) voneinander getrennt sind, welche die erste Zusatzrille (32) mit einer Rille (30) verbindet;
**dadurch gekennzeichnet, dass**:
die rechte Seite (14b) der Mittelzone (14), die auf der rechten Seite der Mittellinie (12) angeordnet ist, mit Bezug auf die rechte Reihe (26) nicht mehr als 5 % der Breite (38) bedeckt und die linke Seite (14a) der Mittelzone (14), die auf der linken Seite der Mittellinie (12) angeordnet ist, nicht mehr als 10 % der Breite (38) bedeckt;
die rechte Randzone (18) nicht mehr und nicht weniger als 15 % der Breite (38) bedeckt;
das Ende (28b) des ersten Abzweigs (28a) sich in der Mittelzone (14) befindet und der erste Abzweig (28a) sich schräg über die rechte Zwischenzone (22) hinweg zu der rechten Randzone (18) erstreckt; die Profilblöcke (28) in der Mittelzone (14), in der Längsrichtung des Reifens gesehen, sich in einer solchen Weise abwechseln, dass jeder zweite Profilblock (28) ein Profilblock (28) der linken Reihe (24) ist und jeder zweite Profilblock (28) ein Profilblock (28) der rechten Reihe (26) ist; und
der Boden der zweiten Zusatzrille (34) erhöht ist, um eine Stütze (36) zu bilden, die an dem ersten und dem zweiten Abzweig (28a, 28c) angebracht ist, um sie in einer solchen Weise zu verbinden, dass die Tiefe der zweiten Zusatzrille (34) in dem Bereich der Stütze (36) kleiner ist als die Tiefe der Rille (30) und die Tiefe der ersten Zusatzrille (32) größer ist als die Tiefe der zweiten Zusatzrille (34).

2. Reifen nach Anspruch 1, wobei
die linke Randzone (16) 15 % der Breite (38) bedeckt;
jeder Profilblock (28) der linken Reihe (24) umfasst:
einen ersten Abzweig (28a), der ein Ende (28b) in der Mittelzone (14) aufweist und sich schräg über die linke Zwischenzone (20) zu der linken Randzone (16) erstreckt, und
einen zweiten Abzweig (28c), der ein Ende (28d) in der linken Zwischenzone (20) aufweist und sich schräg zu der linken Randzone (16) erstreckt;
der erste und der zweite Abzweig (28a, 28c) in der linken Randzone (16) durch eine erste Zusatzrille (32) zwischen sich voneinander getrennt sind;
der erste und der zweite Abzweig (28a, 28c) in der linken Zwischenzone (20) durch eine zweite Zusatzrille (34) voneinander getrennt sind, die die erste Zusatzrille (32) mit einer Rille (30) verbindet; und
der Boden der zweiten Zusatzrille (34) erhöht ist, um eine Stütze (36) zu bilden, die an dem ersten und dem zweiten Abzweig (28a, 28c) angebracht ist, um sie in einer solchen Weise zu verbinden, dass die Tiefe der zweiten Zusatzrille (34) in der Zone der Stütze (36) kleiner ist als die Tiefe der Rille (30) und die Tiefe der ersten Zusatzrille (32) größer ist als die Tiefe der zweiten Zusatzrille (34).

3. Reifen nach Anspruch 1 oder 2, wobei sich der erste Abzweig (28a) jedes Profilblocks (28) über die Mittellinie (12) erstreckt.

4. Reifen nach einem der Ansprüche 1 bis 3, wobei sich in der rechten Reihe (26) die erste Zusatzrille (32) jedes Profilblocks (28) von der rechten Randzone (18) zu der rechten Zwischenzone (22) erstreckt und die zweite Zusatzrille (34) eine Verlängerung zu der ersten Zusatzrille (32) ist.

5. Reifen nach einem der Ansprüche 1 bis 4, wobei die zweite Zusatzrille (34) und die Stütze (36) zwischen dem Ende (28d) des zweiten Abzweigs (28c) und dem ersten Abzweig (28a) angeordnet sind.

6. Reifen nach einem der Ansprüche 1 bis 5, wobei in der rechten Reihe (26) die zweite Zusatzrille (34) und die Stütze (36) vollständig in der rechten Zwischenzone (22) angeordnet sind.

7. Reifen nach einem der Ansprüche 1 bis 6, wobei sich die Stütze (36) über die gesamte Länge der zweiten Zusatzrille (34) erstreckt.

8. Reifen nach einem der Ansprüche 1 bis 7, wobei die Distanz zwischen dem Boden der ersten Zusatzrille (32) und dem Boden der Rille (30) mindestens 10 % und nicht mehr als 40 % der Tiefe des Bodens der Rille (30), in der Radialrichtung des Reifens gesehen, beträgt.

9. Reifen nach einem der Ansprüche 1 bis 8, wobei die Distanz zwischen dem Boden der zweiten Zusatzrille (34) und dem Boden der Rille (30) mindestens 25 % der Tiefe des Bodens der Rille (30), in der Radialrichtung des Reifens gesehen, beträgt.

## Revendications

1. Bandage pneumatique pour un véhicule, le bandage comprenant :
une partie faisant office de bande de roulement (10) s'étendant autour du bandage dans la direction longitudinale du bandage et entrant en contact avec la surface du sol lors de son utilisation, et possédant une largeur (38) dans la direction transversale à la direction longitudinale du bandage ;
dans lequel la partie faisant office de bande de roulement (10) définit une ligne centrale (12) et une zone centrale (14) placée par-dessus la ligne centrale (12) et entre une zone marginale gauche et une zone marginale droite (16,18) de la partie faisant office de bande de roulement, les zones marginales étant à leur tour placées à deux bords opposés de la partie faisant office de bande de roulement d'une manière telle qu'une zone intermédiaire gauche (20) est placée entre la zone marginale gauche (16) et la zone centrale (14), en séparant ces dernières, et une zone intermédiaire droite (22) est placée entre la zone marginale droite (18) et la zone centrale (14), en séparant ces dernières ;
dans lequel la partie faisant office de bande de roulement (10) comprend en outre :
une rangée gauche et une rangée droite (24, 26) de pavés de bande de roulement (28), les rangées étant adjacentes l'une à l'autre et s'étendant dans la direction longitudinale du bandage, et les pavés de bande de roulement étant séparés les uns des autres par des rainures (30) ;
dans lequel, dans la partie faisant office de bande de roulement (10),
chaque pavé de bande de roulement (28) est placé dans une position oblique par rapport à la direction longitudinale du bandage ;
chaque pavé de bande de roulement (28) de la rangée droite (26) comprend :
une première branche (28a) possédant une extrémité (28b) et s'étendant en oblique en direction de la zone marginale droite (18) ; et
une seconde branche (28c) possédant une extrémité (28d) dans la zone intermédiaire droite (22) et s'étendant en oblique en direction de la zone marginale droite (18) ;
la première et la seconde branche (28a, 28c) sont séparées l'une de l'autre dans la zone marginale droite (18) par une première rainure auxiliaire (32) entre elles ; et
la première et la seconde branche (28a, 28c) sont séparées l'une de l'autre dans la zone intermédiaire droite (22) par une seconde rainure auxiliaire (34) reliant la première rainure auxiliaire (32) à une rainure (30) ;
**caractérisé en ce que** :
par rapport à la rangée droite (26), le côté droit (14b) de la zone centrale (14), placé sur le côté droit de la ligne centrale (12) ne recouvre pas plus de 5 % de la largeur (38), et le côté gauche (14a) de la zone centrale (14), placé sur le côté gauche de la ligne centrale (12) ne recouvre pas plus de 10 % de la largeur (38) ;
la zone marginale droite (18) ne recouvre pas plus et pas moins de 15 % de la largeur (38) ;
l'extrémité (28b) de la première branche (28a) est située dans la zone centrale (14) et la première branche (28a) s'étend en oblique à travers la zone intermédiaire droite (22) en direction de la zone marginale droite (18); les pavés de bande de roulement (28) sont disposés en alternance dans la zone centrale (14), lorsqu'on regarde dans la direction longitudinale du bandage, d'une manière telle qu'un pavé respectif de bande de roulement sur deux (28) représente un pavé de bande de roulement (28) de la rangée gauche (24) et qu'un pavé respectif de bande de roulement sur deux (28) représente un pavé de bande de roulement (28) de la rangée droite (26) ; et
la base de la seconde rainure auxiliaire (34) est surélevée afin de former un support (36) qui est fixé à la première et à la seconde branche (28a, 28c) afin de les relier d'une manière telle que la profondeur de la seconde rainure auxiliaire (34) dans la zone dudit support (36) est inférieure à la profondeur de la rainure (30), et la profondeur de la première rainure auxiliaire (32) est supérieure à la profondeur de la seconde rainure auxiliaire (34).

2. Bandage selon la revendication 1, dans lequel :
la zone marginale gauche (16) recouvre 15 % de la largeur (38) ;
chaque pavé de bande de roulement (28) de la rangée gauche (24) comprend :
une première branche (28a) possédant une extrémité (28b) dans la zone centrale (14) et s'étendant en oblique à travers la zone intermédiaire gauche (20) en direction de la zone marginale gauche (16) ; et
une seconde branche (28c) possédant une extrémité (28d) dans la zone intermédiaire gauche (20) et s'étendant en oblique en direction de la zone marginale gauche (16) ;
la première et la seconde branche (28a, 28c) sont séparées l'une de l'autre dans la zone marginale gauche (16) par une première rainure auxiliaire (32) entre elles ;
la première et la seconde branche (28a, 28c) sont séparées l'une de l'autre dans la zone intermédiaire gauche (20) par une seconde rainure auxiliaire (34) reliant la première rainure auxiliaire (32) à une rainure (30) ; et
la base de la seconde rainure auxiliaire (34) est sur élevée afin de former un support (36) qui est fixé à la première et à la seconde branche (28a, 28c) et qui relie ces dernières d'une manière telle que la profondeur de la seconde rainure auxiliaire (34) dans la zone dudit support est inférieure à la profondeur de la rainure (30), et la profondeur de la première rainure auxiliaire (32) est supérieure à la profondeur de la seconde rainure auxiliaire (34).

3. Bandage selon la revendication 1 ou 2, dans lequel la première branche (28a) de chaque pavé de bande de roulement (28) s'étend à travers la ligne centrale (12).

4. Bandage selon l'une quelconque des revendications 1 à 3, dans lequel, dans la rangée droite (26), la première rainure auxiliaire (32) de chaque pavé de bande de roulement (28) s'étend à partir de la zone marginale droite (18) en direction de la zone intermédiaire droite (22) et la seconde rainure auxiliaire (34) représente un prolongement en direction de la première rainure auxiliaire (32).

5. Bandage selon l'une quelconque des revendications 1 à 4, dans lequel la seconde rainure auxiliaire (34) et le support (36) sont placés entre l'extrémité (28d) de la seconde branche (28c) et la première branche (28a).

6. Bandage selon l'une quelconque des revendications 1 à 5, dans lequel, dans la rangée droite (26), la seconde rainure auxiliaire (34) et le support (36) sont disposés complètement dans la zone intermédiaire droite (22).

7. Bandage selon l'une quelconque des revendications 1 à 6, dans lequel le support (36) s'étend sur toute la longueur de la seconde rainure auxiliaire (34).

8. Bandage selon l'une quelconque des revendications 1 à 7, dans lequel la distance entre la base de la première rainure auxiliaire (32) et la base de la rainure (30) représente au moins 10 % et pas plus de 40 % de la profondeur de la base de la rainure (30), lorsqu'on regarde dans la direction radiale du bandage.

9. Bandage selon l'une quelconque des revendications 1 à 8, dans lequel la distance entre la base de la seconde rainure auxiliaire (34) et la base de la rainure (30) représente au moins 25 % de la profondeur de la base de la rainure (30), lorsqu'on regarde dans la direction radiale du bandage.
